# EUROPÄISCHE PATENTANMELDUNG

(11) **EP 1 215 521 A2**
(43) Veröffentlichungstag der Anmeldung: **19.06.2002**
(21) Anmeldenummer: 01128906.3
(22) Anmeldetag: 05.12.2001
(51) Int. Cl.: G02B 27/01, G02F 1/1335

(54) **Head-up-Anzeige**

(30) Priorität: 15.12.2000 DE 10062723
(71) Anmelder: SIEMENS AKTIENGESELLSCHAFT, 80333 München (DE)
(72) Erfinder: Eberhardt, Bernd, 64807 Dieburg (DE); Ludewig, Bernd, 69493 Hirschberg (DE); Mayer, Ralf, Dr., 67295 Bolanden (DE)

(57) **Zusammenfassung**

Bei einem Head-up Display für Fahrzeuge, bei dem Informationen einer Anzeigevorrichtung auf eine transparente Projektionsfläche (12) projiziert werden, weist die Anzeigevorrichtung zwei transparente Scheiben (1,2) auf, zwischen denen eine Flüssigkristallsubstanz (6) und Elektroden (5) angeordnet sind,
wobei polarisiertes Licht die Flüssigkristallsubstanz durchdringt,
wobei die Flüssigkristallsubstanz in Abhängigkeit der Ansteuerung der Elektrode mit einer Spannung das die Flüssigkristallsubstanz durchdringende polarisierte Licht in einer Polarisationsebene dreht,
ist vorgesehen, daß das aus der Flüssigkristallsubstanz austretende polarisierte Licht nicht durch einen Polarisator hindurchgeschickt wird, sondern polarisiert wird durch die Reflektion an der transparenten Projektionsfläche (11) oder an einem oder mehreren sonstigen Reflektoren, der oder die im Strahlengang des polarisierten Lichts zwischen der Flüssigkristallsubstanz und der transparenten Projektionsfläche angeordnet ist bzw. sind.

## Beschreibung

Die Erfindung betrifft ein Head-up Display für Fahrzeuge, bei dem Informationen einer Anzeigevorrichtung auf eine transparente Projektionsfläche projiziert werden. Aus dem Stand der Technik ist es bekannt, als Anzeigevorrichtung ein Flüssigkristalldisplay (LCD) zu durchleuchten und die durch das Flüssigkristalldisplay hindurchtretenden Lichtstrahlen auf einer transparenten Projektionsfläche, beispielsweise der Frontscheibe darzustellen. So kann der Fahrer eines Kraftfahrzeugs Informationen aufnehmen, ohne den Blick von dem Verkehrsgeschehen vor seinem Fahrzeug abwenden zu müssen. Die bekannten Flüssigkristalldisplays weisen zwei im Abstand angeordnete transparente Scheiben auf, auf denen Elektroden angeordnet sind. Zwischen den Elektroden ist eine Flüssigkristallsubstanz angeordnet. Auf den Außenflächen der transparenten Scheiben ist jeweils ein Polarisator aufgebracht. Sofern keine Spannung an zwei sich gegenüberliegenden Elektroden anliegt, wird die Polarisationsrichtung von Lichtstrahlen, die die Flüssigkristallsubstanz durchdringen, um 90 Grad gedreht. Wenn eine Spannung an den Elektroden anliegt, findet keine Drehung bei dem Durchdringen von Licht durch die Flüssigkristallsubstanz statt. Sofern die Polarisationsrichtungen der beiden Polarisatoren um 90 Grad gedreht sind, kann Licht durch das Flüssigkristalldisplay dringen, wenn an den Elektroden keine Spannung anliegt, da die Polarisationsebene des Lichts beim Durchdringen der Flüssigkristallsubstanz ebenfalls um 90 Grad gedreht wird. Liegt eine Spannung an, wird das Licht in seiner Polarisationsrichtung nicht gedreht, so daß es den zweiten Polarisator nicht durchdringen kann. Aus dem Stand der Technik ist es beispielsweise bekannt, die Flüssigkristalldisplays als Punktmatrixanzeigen auszuführen. So können je nach Ansteuern der einzelnen Elektroden der Punktmatrixanzeige Informationen dargestellt werden, die aus einzelnen Bildpunkten zusammengesetzt sind. Die Verwendung solcher bekannten Flüssigkristalldisplays in einem Head-up Display hat den Nachteil, daß eine sehr starke Lichtquelle verwendet werden muß, da zum einen die Helligkeit des Lichtes auf der transparenten Projektionsfläche so groß sein muß, daß die Information auch bei hellem Tageslicht gut wahrnehmbar ist und die bekannten Flüssigkristalldisplays wegen der doppelten Lichtabsorption durch die beiden Polarisatoren nur wenig Licht durchlassen. So muß eine starke Lichtquelle vorgesehen werden, die viel Energie verbraucht und dadurch unerwünschte Wärme produziert, die dann mit großem Aufwand abgeleitet werden muß.

Aufgabe der vorliegenden Erfindung ist es daher, ein Head-up Display mit einer Anzeigevorrichtung mit einer Flüssigkristallsubstanz anzugeben, bei der die Lichtquelle weniger Energie benötigt. Diese Aufgabe wird dadurch gelöst, daß das Licht, das aus der Flüssigkristallsubstanz austritt, nicht durch einen bei einem Flüssigkristalldisplay üblichen Polarisator geschickt wird sondern daß die zweite Polfilertung durch die Reflektion des Lichts erfolgt, entweder an der transparenten Projektionsfläche oder an einem oder mehreren Spiegeln, die im Strahlengang des polarisierten Lichts zwischen der Flüssigkristallsubstanz und der transparenten Projektionsfläche angeordnet sind.

Die transparente Projektionsfläche kann Teil der Frontscheibe des Fahrzeugs sein oder eine separate Scheibe, die zwischen der Frontscheibe und dem Kraftfahrer angeordnet ist.

Die Erfindung wird nachfolgend anhand der Figuren näher erläutert.

Es zeigen:
- Fig. 1:: einen Teilschnitt durch ein Flüssigkristalldisplay nach dem Stand der Technik,
- Fig. 2:: ein Ausführungsbeispiel des erfindungsgemäßen Head-up Displays,
- Fig. 3:: ein weiteres Ausführungsbeispiel des erfindungsgemäßen Head-up Displays.

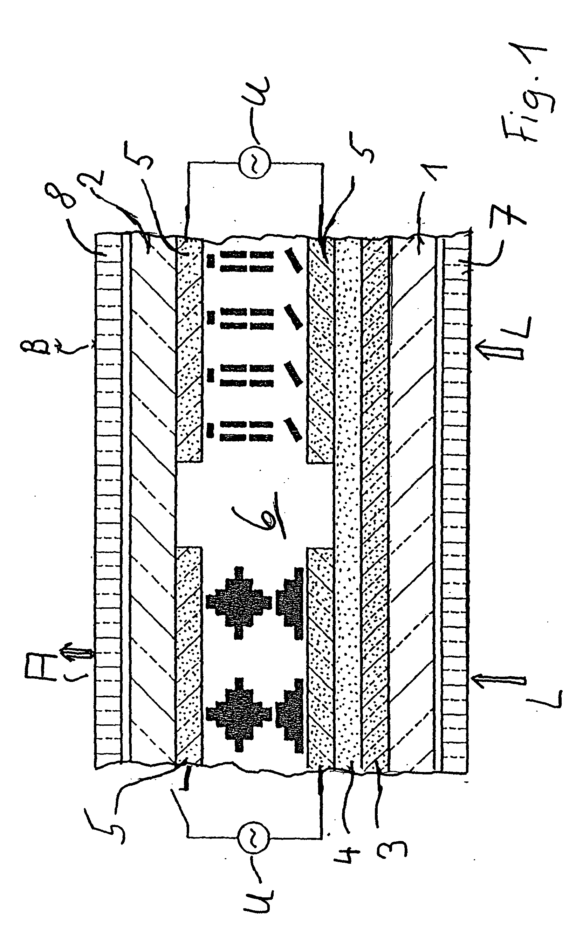

Fig. 1 zeigt in einem Teilschnitt durch ein Flüssigkristalldisplay in Form einer Punktmatrixanzeige den Schnitt durch zwei Bildpunkte (Pixel) A, B. Der Teilschnitt durch ein Flüssigkristalldisplay zeigt eine vordere transparente Wand 1 und eine hintere transparente Wand 2. Auf der vorderen transparenten Wand 1 ist eine transparente Heizschicht 3 mit einer transparenten Isolation 4 angeordnet. Auf der transparenten Isolation 4 und der transparenten Wand 2 sind transparente Elektroden 5 angeordnet. Die vordere transparente Wand 1 und die hintere transparente Wand 2 sind an ihren nicht dargestellten Enden mittels Seitenwänden miteinander verbunden, so daß ein geschlossener Raum gebildet wird, der durch die Seitenwände, die Elektroden 5, die transparente Isolation 4 und die hintere transparente Wand 2 gebildet wird. Dieser Raum ist mit Flüssigkristallsubstanz 6 gefüllt. Auf der Außenseite der vorderen und hinteren transparenten Wände 1, 2 ist jeweils ein Polarisator 7, 8 angeordnet, der jeweils nur Licht einer bestimmten Polarisationsebene durchläßt. Die Polarisationsebenen der Polarisatoren 7, 8 stehen senkrecht aufeinander.

Wenn keine Spannung an zwei sich gegenüber liegenden Elektroden 5 anliegt, wie im Beispiel die Elektroden 5 auf der linken Seite für einen Bildpunkt A gezeigt, dreht die Flüssigkristallsubstanz 6 die Polarisationsebene des sie durchdringenden Lichtes um 90 Grad, so daß das durch den Polarisator 7 polarisierte Licht den Polarisator 8 passieren kann.

Sofern eine Spannung U an den Elektroden 5 anliegt, wie im Beispiel auf der rechten Seite für einen Bildpunkt B gezeigt, dreht die Flüssigkristallsubstanz 6 die Polarisationsebene des eindringenden Lichtes nicht. So kann das Licht nicht den Polarisator 8 durchdringen. Im Ergebnis sieht ein Betrachter auf der linken Seite einen hellen Bildpunkt A und auf der rechten Seite einen dunklen bzw. keinen Bildpunkt B.

Die Heizschicht 3 erweitert den Temperaturbereich, in dem das Flüssigkristalldisplay wirksam arbeiten kann, ist jedoch bei normalen Umgebungstemperaturen ebenso wie die für die Heizschicht 3 vorhandene transparente Isolation 4 für die Funktion nicht erforderlich.

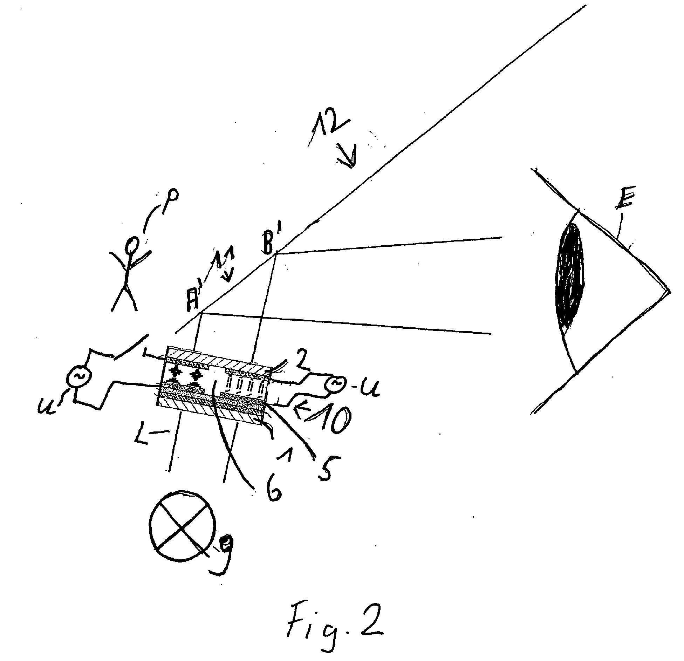

In Fig. 2 weist das Ausführungsbeispiels des erfindungsgemäßen Head-up Displays eine Lichtquelle 9, eine Anzeigevorrichtung 10 und eine transparente Projektionsfläche 11 auf. Die transparente Projektionsfläche 11 ist Teil einer Frontscheibe 12 eines ansonsten nicht dargestellten Fahrzeugs, so daß ein Fahrer der Fahrzeugs, dessen Auge mit E bezeichnet ist, sowohl die auf die Projektionsfläche projizierten Bildpunkte A', B' als auch das Verkehrsgeschehen vor der Frontscheibe, beispielsweise eine in seiner Fahrtrichtung befindliche Person P gleichzeitig wahrnehmen kann. Von der Anzeigevorrichtung 10 sind zur besseren Darstellung nur zwei Bildpunkte A, B dargestellt. Praktische Ausführungsformen werden je nach gewünschter Auflösung eine Anzahl von mehreren Dutzend bis mehreren 100 000 Bildpunkten verwenden. Die Anzeigevorrichtung 10 ist wie das Flüssigkristalldisplay aus Fig. 1 aufgebaut mit der Ausnahme, daß es keine Polarisatoren 7, 8 aufweist. Die Lichtquelle 9 sendet bereits polarisiertes Licht durch die Anzeigevorrichtung 10. Die Flüssigkristallsubstanz 6 auf der linken Seite der Anzeigevorrichtung 10 dreht die Polarisationsebene einfallender Lichtstrahlen L um 90 Grad, da an der Elektrode 5 auf der linken Seite keine Spannung anliegt. Die Flüssigkristallsubstanz 6 auf der rechten Seite der Anzeigevorrichtung 10 dreht die Polarisationsebene nicht, da eine Spannung zwischen den Elektroden 5 auf der rechten Seite angelegt ist.

Die transparente Projektionsfläche 11 wirkt als zweiter Polarisator und hat beispielsweise eine Polarisationsebene, die senkrecht zur Zeichenebene der Fig. 2 liegt. Wenn dann die Lichtquelle 9 polarisiertes Licht aussendet, dessen Polarisationsebene parallel zur Zeichenebene der Fig. 2 liegt, wird das Licht auf der linken Seite der Anzeigevorrichtung 10 im Bildpunkt A senkrecht zur Zeichnungsebene gedreht, während die Polarisationsebene des Lichtes im Bildpunkt B waagerecht zur Zeichnungsebene verbleibt. Da die Polarisationsebene der transparenten Projektionsfläche 11 senkrecht zur Zeichenebene steht, wird nur das Licht des Bildpunktes A im Punkt A' zum Auge E reflektiert, während das Licht des Bildpunktes B im Punkt B' nicht reflektiert wird. Somit gelangt im Ergebnis nur Licht von Bildpunkten zum Auge E, deren Elektroden 5 nicht mit einer Spannung angesteuert sind.

Wenn ein Betrachter direkt auf die Anzeigevorrichtung 10 schauen würde, würde er unabhängig von der Ansteuerung der Elektroden gleichhelle Bildpunkte sehen, da das Licht die Anzeigevorrichtung 10 ungehindert verlassen kann.

Statt der Verwendung einer polarisierten Lichtquelle ist es auch möglich, eine gewöhnliche Lichtquelle vorzusehen und zwischen die Lichtquelle und der Flüssigkristallsubstanz 6 der Anzeigevorrichtung 10 einen ersten Polarisator vorzusehen, beispielsweise auf der Außenseite der Anzeigevorrichtung 10. Der zweite Polarisator kann auch durch einen Reflektor realisiert sein, der aus zwei Materialien mit unterschiedlichen optischen Brechungszahlen besteht, beispielsweise aus Glasspiegeln.

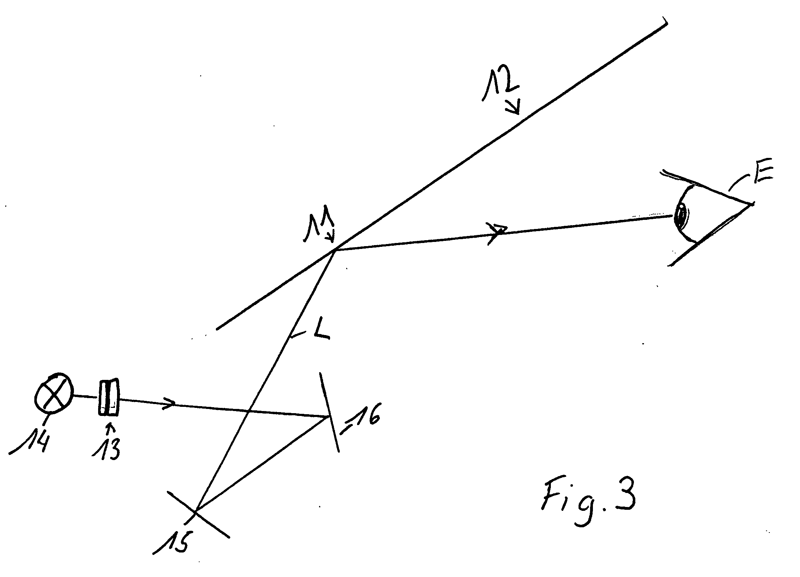

Ein weiteres Beispiel zeigt Fig. 3. Eine Anzeigevorrichtung 13 weist auf ihrer Seite zu einer Lichtquelle 14 bereits einen ersten Polarisator 7 auf und unterscheidet sich damit von der LCD in Fig. 1 nur dadurch, daß sie keinen zweiten Polarisator 8 aufweist. Weiterhin sind im Unterschied zu Fig. 2 Umlenkspiegel aus Metall 15, 16 vorhanden. Die Umlenkspiegel dienen der Bildvergrößerung und/oder Bildkorrektur. Eine Polarisation findet bei ihnen wegen ihres Materials nicht statt.

## Patentansprüche

1. Head-up Display für Fahrzeuge, bei dem Informationen einer Anzeigevorrichtung (10, 13) auf eine transparente Projektionsfläche (11) projiziert werden, wobei die Anzeigevorrichtung (10, 13) zwei transparente Scheiben (1, 2) aufweist, zwischen denen eine Flüssigkristallsubstanz (6) und Elektroden (5) angeordnet sind,
wobei polarisiertes Licht die Flüssigkristallsubstanz (6) durchdringt,
wobei die Flüssigkristallsubstanz (6) in Abhängigkeit der Ansteuerung der Elektroden (5) mit einer Spannung das die Flüssigkristallsubstanz durchdringende polarisierte Licht in einer Polarisationsebene dreht,
**dadurch gekennzeichnet, daß** das aus der Flüssigkristallsubstanz (6) austretende polarisierte Licht nicht durch einen Polarisator hindurchgeschickt wird, sondern polarisiert wird durch die Reflektion an der transparenten Projektionsfläche oder an einem oder mehreren sonstigen Reflektoren, der oder die im Strahlengang des polarisierten Lichts zwischen der Flüssigkristallsubstanz (6) und der transparenten Projektionsfläche (11) angeordnet ist bzw. sind.

2. Head-up Display nach Anspruch 1, **dadurch gekennzeichnet, daß** eine Frontscheibe (12) des Fahrzeugs als transparente Projektionsfläche (11) verwendet wird.

3. Vorrichtung nach Anspruch 1 oder 2, **dadurch gekennzeichnet, daß** zwischen der Anzeigevorrichtung (13) und der Lichtquelle (14) ein Polarisator (7) angeordnet ist.
